Europäisches Patentamt

European Patent Office

Office européen des brevets

(19)

(11) Numéro de publication: **0 015 797**
**B1**

(12) # FASCICULE DE BREVET EUROPEEN

(45) Date de publication du fascicule du brevet:
**04.09.85**

(51) Int. Cl.⁴: **H 04 N 5/44**

(21) Numéro de dépôt: **80400206.1**

(22) Date de dépôt: **12.02.80**

(54) Système d'interconnexion sélective variable audio-vidéo.

(30) Priorité: **15.02.79 FR 7903862**

(43) Date de publication de la demande:
**17.09.80 Bulletin 80/19**

(45) Mention de la délivrance du brevet:
**04.09.85 Bulletin 85/36**

(84) Etats contractants désignés:
**AT BE CH DE FR GB IT LU NL SE**

(56) Documents cités:
**DE - A - 2 740 009**
**DE - B - 2 714 501**
**DE - B - 2 724 153**
**FR - A - 2 389 942**

**FUNKSCHAU, vol. 47, no. 8, 1975 Munich DE "Ein Video-Kommunikationssystem", page 110**
**IEEE TRANSACTIONS ON CONSUMER ELECTRONICS, vol. CE 24, no. 3, Août 1978, New York US CLIFFORD et al.: "Microprocessor Based, Software Defined Television Controller", pages 436-441**
**IEEE COMMUNICATIONS, vol. 17, no. 4, juillet 1979 New York US KAISER: "New Services and their introduction into excisting networks" pages 4-12**
**Manuskripte der Vorträge, gehalten auf der 6. Jahrestagung der FKTG, 9-18 Okt. 1978, Vortrag 1: R. Suhrmann, Volvo GmbH, Appl.-Labor Hamburg**

(73) Titulaire: **SYNDICAT DES INDUSTRIES DE MATERIELS AUDIOVISUELS ELECTRONIQUES (S.I.M.A.V.E.L.E.C.), 11, rue Hamelin, F-75783 Paris Cedex 16 (FR)**

(72) Inventeur: **Bourassin, Lucien, 17 rue Armengaud, F-92210 Saint Cloud (FR)**
Inventeur: **Condat, Bernard, 6 place Alix La Membrolle, F-49220 Le Lion d'Angers (FR)**
Inventeur: **Fortin, Jacques, 9 rue Racine, F-91600 Savigny Sur Orge (FR)**
Inventeur: **Leger, Alain Montgilet, F-49820 Juigne Sur Loire (FR)**
Inventeur: **Soto, Joseph, 212 avenue Max Dormoy, F-92120 Montrouge (FR)**
Inventeur: **Solvinto, Jean-Claude, 123 rue de Saint-Cloud, F-92000 Nanterre (FR)**

(74) Mandataire: **Bouju, André, 38 Avenue de la Grande Armée, F-75017 Paris (FR)**

## Description

La présente invention concerne un système de commande d'interconnexion sélective variable audio-vidéo à usage domestique pour relier entre eux au moins un téléviseur et plusieurs appareils périphériques tels qu'un magnétoscope, un jeu vidéo, un récepteur de télétexte, ou un récepteur d'émission transmise par satellite, ce système étant conforme au préambule de la revendication 1.

A l'heure actuelle, on ne peut raccorder à un téléviseur qu'un seul périphérique à la fois. Le nombre de ces périphériques est d'ailleurs restreint: jeux électroniques, magnétoscope (qui se raccordent en radio-fréquences via la prise antenne du récepteur), magnétophone qui se raccorde en audiofréquences.

Or, dans un avenir proche, le nombre de périphériques raccordables au téléviseur domestique va croître de façon sensible puisque l'on va pouvoir disposer:

. de terminaux spécifiques aux nouveaux services de radiodiffusion, ou

. de télécommunications destinés au grand public tels que ceux actuellement dénommés;

– ANTIOPE: Télétexte radiodiffusé intégré dans le signal de télévision, ou diffusé à plein canal.

– EPEOS: Service d'enregistrement automatique des programmes reçus.

– DISCRET: Service de télévision réservé aux auditeurs équipés d'un décodeur approprié.

– TITAN: Télétexte interactif utilisant la voie P et T mais visualisé sur un récepteur de télévision.

. de nouvelles applications vidéo: caméras de surveillance, analyseurs de diapositives, de films, vidéo-disques, image dans l'image, venant s'ajouter aux applications déjà connues: magnétoscope, jeux vidéo.

On peut également prévoir que l'auditeur voudra utiliser les éléments de sa chaîne «audio» haute fidélité en conjonction avec le téléviseur et ses périphériques afin de disposer d'un ensemble audio-visuel domestique totalement intégré.

On connaît par la revue FUNKSCHAU (volume 47, no 8, 1975, page 110) un système d'interconnexion permettant de relier un certain nombre de postes visiophoniques d'abonnés soit entre eux soit avec une banque de données qui comprend elle-même un certain nombre de postes, tels que magnétoscope, caméra, lecteur de microfiches.

Un inconvénient de ce système est qu'il apparaît réservé essentiellement à l'usage professionnel. Il constitue à ce titre un système complexe de commutation sélective vers diverses sources télématiques.

On connaît aussi par le brevet allemand DE-A-2 740 009 un système interactif permettant la réception et la mémorisation de textes en provenance de diverses sources, et leur affichage sur un téléviseur.

Ce système est toutefois limité à la connexion de périphériques générateurs de signaux alphanumériques et ne permet pas la visualisation d'images vidéo mouvantes, en dehors de celles normalement reçues sur l'antenne par le téléviseur.

Le problème à la base de la présente invention est de fournir un système qui permet des interconnexions simultanées entre plusieurs émetteurs et plusieurs récepteurs de signaux d'un ensemble audio-vidéo à usage domestique, qui permet de les commander simplement à partir d'un émetteur de télécommande unique, dont l'utilisation soit à la portée d'un utilisateur non spécialisé, et qui soit d'une fabrication simple et peu onéreuse.

Ce problème est résolu par les moyens énoncés dans la partie caractérisante de la revendication 1.

Les connexions sont réalisées en permanence par ces lignes, et l'utilisateur n'a besoin que de rendre actives sélectivement celles qui l'intéressent à un instant donné, en donnant de façon simple, les ordres nécessaires. La complexité réelle de l'opération est alors prise en compte par le microprocesseur. Par action sur le clavier de commande, l'utilisateur provoque la liaison d'un quelconque périphérique avec le téléviseur, ou la liaison sélective des périphériques entre eux.

Suivant une réalisation préférée de l'invention, comportant au moins un automate de visualisation pour afficher des informations alphanumériques sur un appareil récepteur d'images, et une mémoire morte associée à chaque appareil périphérique, chaque mémoire morte contient des informations détaillées concernant les prescriptions de mise en service du périphérique correspondant, et est reliée au microprocesseur pour la sélection des informations à présenter, et à l'automate de visualisation pour l'affichage de ces informations.

Les opérations réelles de mise en service d'une combinaison donnée de périphérique peuvent être relativement complexes, comme il a été indiqué plus haut. Sur une interrogation simple et «en clair» de l'utilisateur, la liste précise et complète de ces opérations vient s'afficher sur le téléviseur, évitant à l'utilisateur par exemple toute consultation de brochure.

Suivant une réalisation préférée de l'invention, un clavier de commande est relié à un dispositif émetteur coopérant avec un organe sensible logé dans le téléviseur, cet organe sensible est raccordé aux prises de péritélévision qui réalisent la connexion du système avec chacun des périphériques, pour transmettre directement à ces derniers les ordres de réglage et de commande, et est relié au microprocesseur pour la transmission des ordres d'interconnexion.

Grâce à cette disposition, le téléviseur est entièrement «transparent» aux signaux du système et peut donc être d'un modèle courant, sans aucune disposition particulière en rapport avec le système.

Suivant une réalisation perfectionnée de l'invention, le système comprend un module portant des dispositifs de génération de commandes et commutations nécessaires à l'insertion sur l'écran du(des) téléviseur(s) d'une image auxiliaire appelée «image dans l'image», qui permet à l'utilisateur de surveiller un autre programme que celui qu'il regarde, et ce module est connecté simultanément à deux bus analogiques correspondant à des fonctions de réception dudit module, et à un bus analogique correspondant à une fonction d'émission de ce même module.

D'autres particularités et avantages de l'invention ressortiront encore de la description détaillée qui va suivre.

Aux dessins annexés, donnés à titre d'exemple non limitatif:

– la figure 1 est un bloc diagramme fonctionnel destiné à donner une idée de l'objet de l'invention,

– la figure 2 est un diagramme de principe de l'invention montrant une répartition-type d'un certain nombre d'organes d'une chaîne,

– la figure 3 est un schéma synoptique de principe montrant l'interconnexion des étages de la chaîne et les lignes de liaison,

– la figure 4 est un schéma de principe de la structure en parallèle selon l'invention;

– la figure 5 représente schématiquement la structure du fond du boîtier, en relation avec les cartes-modules,

– la figure 6 est un schéma général montrant, notamment la disposition de la liaison de télécommande,

– la figure 7 est une vue en perspective du boîtier, avec arraché partiel,

– la figure 8 est une partie du schéma détaillé des lignes disposées au fond du boîtier,

– la figure 9 est un schéma synoptique de principe d'une carte-module,

– la figure 10 est un schéma fonctionnel montrant la procédure d'échange conversationnel entre deux périphériques,

– la figure 11 est un schéma fonctionnel montrant le fonctionnement des liaisons avec le téléviseur et ses organes de commande.

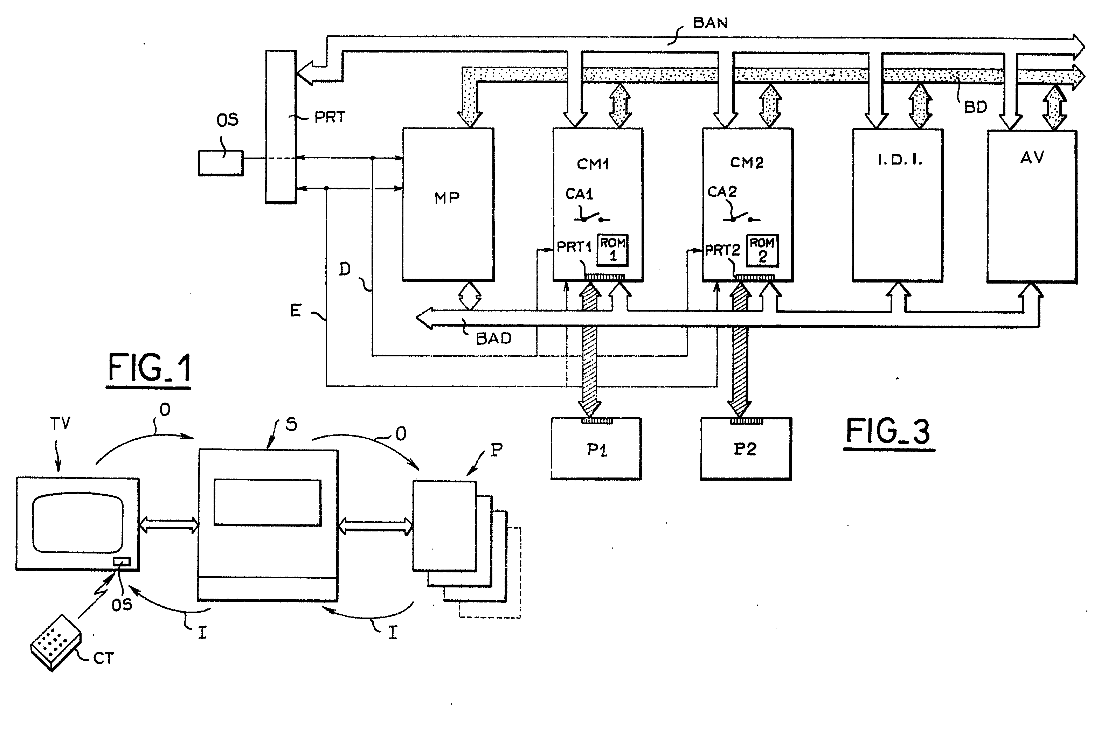

En référence à la figure 1, le système S conforme à l'invention est interposé entre un téléviseur TV et un certain nombre d'appareils périphériques P, entre lesquels il établit une interconnexion fonctionnelle sélective.

Cette interconnexion est à double sens, permettant de transmettre des périphériques P, vers le téléviseur TV, des informations I qui sont normalement des signaux «audio» et/ou «vidéo» utiles, engendrés ou transmis par les périphériques, mais qui peuvent être aussi des signaux de service, et aussi de transmettre des ordres O vers les périphériques à partir du téléviseur. A cette fin, le téléviseur TV contient un organe sensible OS, recevant les signaux d'un clavier de télécommande CT et les transmettant au système S.

Le nombre des appareils périphériques n'est pas limité, non plus d'ailleurs que le nombre des téléviseurs.

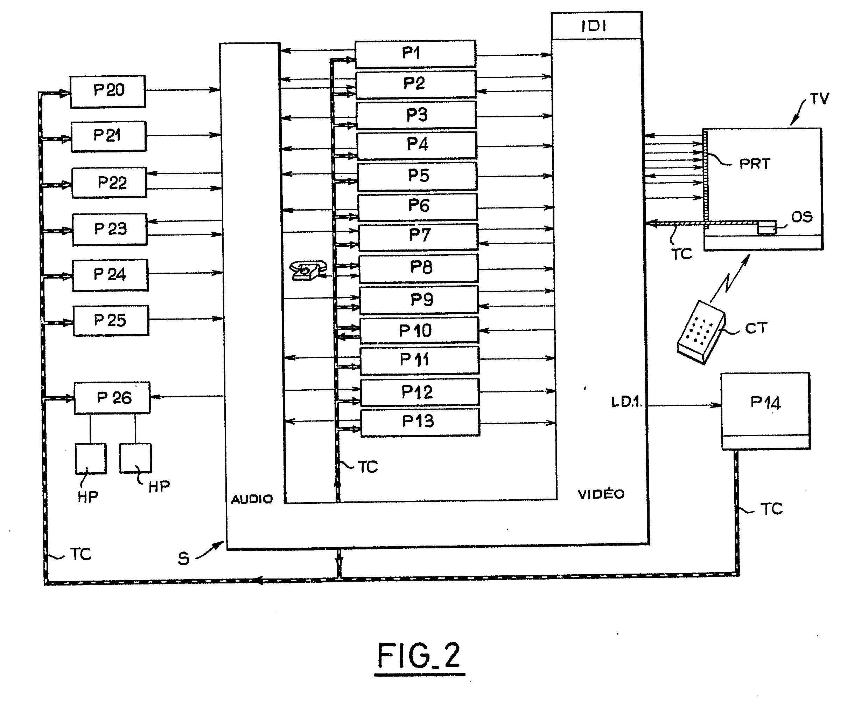

On a représenté de façon plus précise l'interconnexion fonctionnelle des périphériques P avec le système S, sur la figure 2, où sont représentés, à titre non limitatif, un certain nombre de périphériques. Ces périphériques sont répartis en appareils vidéo (ou audio-vidéo) et en appareils purement audio.

Parmi les périphériques vidéo ou audio-vidéo, on a représenté:

. en P1, un récepteur 12 GHz pour capter les émissions transmises par satellite,

. en P2, un magnétoscope,

. en P3, un analyseur de films, pour visualiser un film de cinéma sur téléviseur,

. en P4, un analyseur de diapositives ayant le même objet,

. en P5, une caméra vidéo,

. en P6, un générateur d'image dans l'image,

. en P7, un récepteur de télétexte (dénommé ANTIOPE),

. en P8, un émetteur-récepteur de télétexte conversationnel (dénommé TITAN),

. en P9, un transmetteur de programmes réservés (dénommé DISCRET),

. en P10, un dispositif de mise en service automatique du magnétoscope, sur un signal inclus dans le programme à enregistrer (dénommé EPEOS),

. en P11, un jeu vidéo,

. en P12, un générateur audio-graphique,

. en P13, un lecteur de vidéo-disques,

. en P14, un moniteur TV, c'est-à-dire un récepteur de service.

Parmi les périphériques purement audio, on a représenté:

. en P20, un récepteur à modulation d'amplitude,

. en P21, un récepteur à modulation de fréquence,

. en P22, un magnétophone à cassettes,

. en P23, un magnétophone à bande,

. en P24, un lecteur de disques numérique,

. en P25, une platine tourne-disques,

. en P26, un amplificateur à basse fréquence avec ses haut-parleurs HP.

Chacun de ces périphériques est relié au système par une ou plusieurs flèches dont le sens se comprend facilement. Ainsi, le récepteur 12 GHz P1 émet un signal utile vidéo et un signal utile audio. Par contre, le magnétoscope P2 peut, à la fois, émettre et recevoir de tels signaux.

Les signaux vidéo sont, soit des signaux vidéo composites, soit des signaux correspondant à trois fonctions linéaires des trois signaux fondamentaux, par exemple R. V. B. (rouge, vert, bleu), suivant la nature du périphérique comme indiqué sur la figure 2.

Dans le domaine purement audio, seuls les magnétophones P22, P23, émettent et reçoivent des signaux utiles. Les autres émettent seulement, ou reçoivent seulement (amplificateur P26).

Le téléviseur TV reçoit et émet en vidéo comme en audio. En outre, il reçoit les signaux R. V. B., et ceux correspondant au dispositif I. D. I. (image dans l'image), par l'intermédiaire d'une prise de péritélévision PRT.

Une ligne de télécommande TC (hachurée) part de l'organe sensible OS pour attaquer tous les périphériques par l'intermédiaire du système S et provoquer leur mise en service sélective.

Dans le cas particulier du déclencheur automatique EPEOS de magnétoscope (P10), ce périphérique est seulement récepteur d'un signal vidéo de service, et il attaque le magnétoscope P2 par l'intermédiaire de la ligne TC.

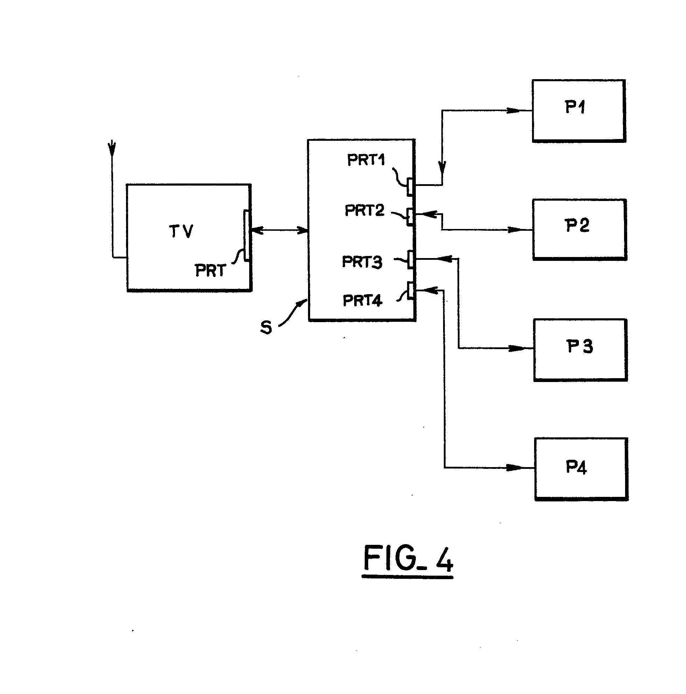

On va maintenant décrire plus en détail, en référence aux figures 3 à 7, la constitution du système et la réalisation des interconnexions.

En référence à la figure 3, à chaque périphérique tel que P1, P2, est reliée une carte module, respectivement CM1, CM2, par l'intermédiaire d'une prise de péritélévision PRT 1, PRT 2. Les cartes modules sont, d'autre part, reliées à la prise de péritélévision PRT du téléviseur par l'intermédiaire d'un bus analogique BAN multifilaire, ce qui assure le transit des informations utiles entre le téléviseur et les périphériques.

Un fil de données D est relié à l'organe sensible OS par l'intermédiaire de la prise PRT pour recevoir les ordres de l'utilisateur et les transmettre à un micro-processeur MP qui les décode et les transmet par un bus de données BD multifilaire aux cartes modules, pour ouvrir ou fermer sélectivement des interrupteurs analogiques respectifs CA1, CA2, et rendre active la liaison correspondante entre un ou plusieurs périphériques prédéterminés et le bus analogique BAN. Cette opération s'effectue en coopération avec un bus d'adressage BAD reliant les cartes modules au microprocesseur.

Un fil d'échange E relie entre elles les cartes modules, le téléviseur et le microprocesseur pour assurer, grâce à ce dernier, une circulation ordonnée des informations de service sur le fil de données.

Enfin, un automate de visualisation AV est relié au microprocesseur et aux cartes modules par le but de données BD, les signaux décodés émis par le microprocesseur ainsi que les prescriptions contenues dans des mémoires mortes ROM 1, ROM 2, contenues dans les cartes modules. Ces prescriptions représentent le détail des ordres que doit donner l'utilisateur pour voir s'effectuer l'interconnexion qu'il souhaite. Par le bus analogique BAN, l'automate AV visualise ces prescriptions sur le téléviseur.

L'ensemble des fils D et E constitue la ligne de télécommande TC mentionnée plus haut.

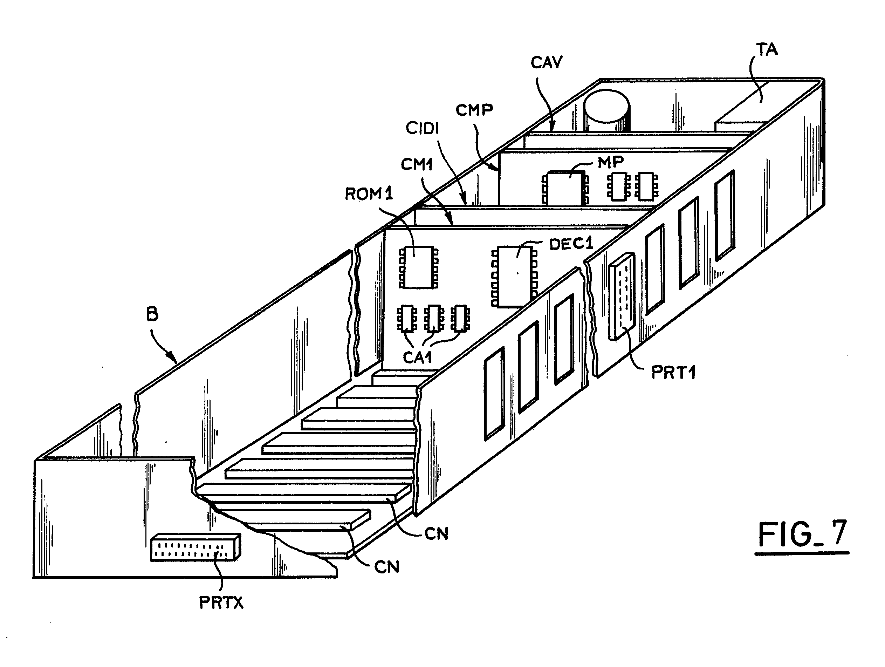

Matériellement, le système comprend un boîtier B (figure 7), dans lequel sont enfichées les cartes modules telles que CM1, en nombre correspondant aux périphériques à desservir, sur des connecteurs répétitifs CN tous identiques, de façon à conférer à l'ensemble un caractère modulaire permettant, en cas de besoin, l'adjonction de cartes modules supplémentaires. Chaque carte module comprend sa mémoire ROM 1 et son ensemble d'interrupteurs CA1, ainsi qu'un décodeur DEC 1.

Pour plus de clarté, on n'a représenté sur la figure 7, qu'une seule carte module affectée de l'indice 1, mais il est bien évident que le boîtier B en contient un certain nombre.

A la suite des cartes modules, on trouve une carte CMP portant le microprocesseur MP, une carte CAV portant l'automate de visualisation AV et une carte pour le dispositif I. D. I., référencée

CIDI ce module comprenant des moyens pour choisir l'image principale et l'image secondaire parmi toutes les sources disponibles.

Enfin, le boîtier B contient encore un transformateur d'alimentation TA.

A chaque carte module CM1 est associée une prise de péritélévision PRT 1, tandis qu'une autre prise PRT X est prévue pour la liaison avec le téléviseur.

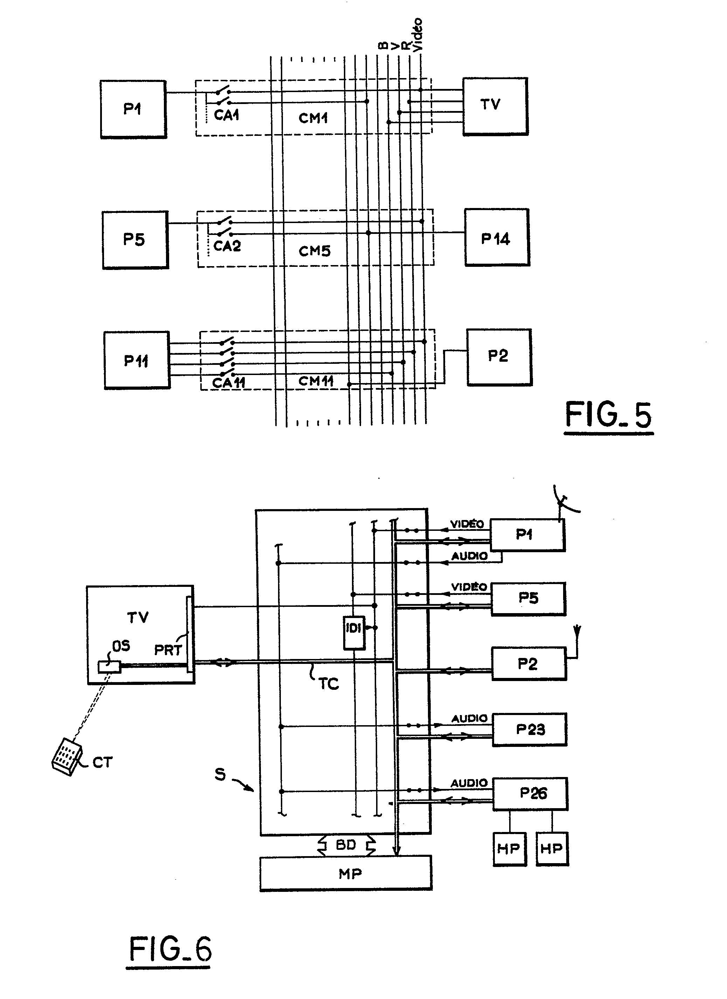

Sur le fond du boîtier sont disposés les différents bus et lignes, suivant le schéma simplifié de la figure 5. Pour plus de clarté, on n'a retenu ici que les périphériques P1, P2, P5, P11 et P14 de la figure 2, ainsi que le téléviseur TV.

Le téléviseur TV est relié à une ligne vidéo et à trois lignes R, V, B.

Le récepteur de satellite P1 peut être relié, soit au téléviseur TV, soit au moniteur P14, par le jeu des interrupteurs CA1 de la carte module CM1. De même, la caméra vidéo P5 peut être reliée à l'un ou l'autre de ces récepteurs par le jeu des interrupteurs CA2. Le jeu vidéo P11 peut être relié en vidéo composite ou en R, V, B au téléviseur TV.

Dans l'exemple décrit, les divers périphériques sont reliés en parallèle au boîtier B qui contient toutes les cartes modules, suivant le schéma de la figure 4.

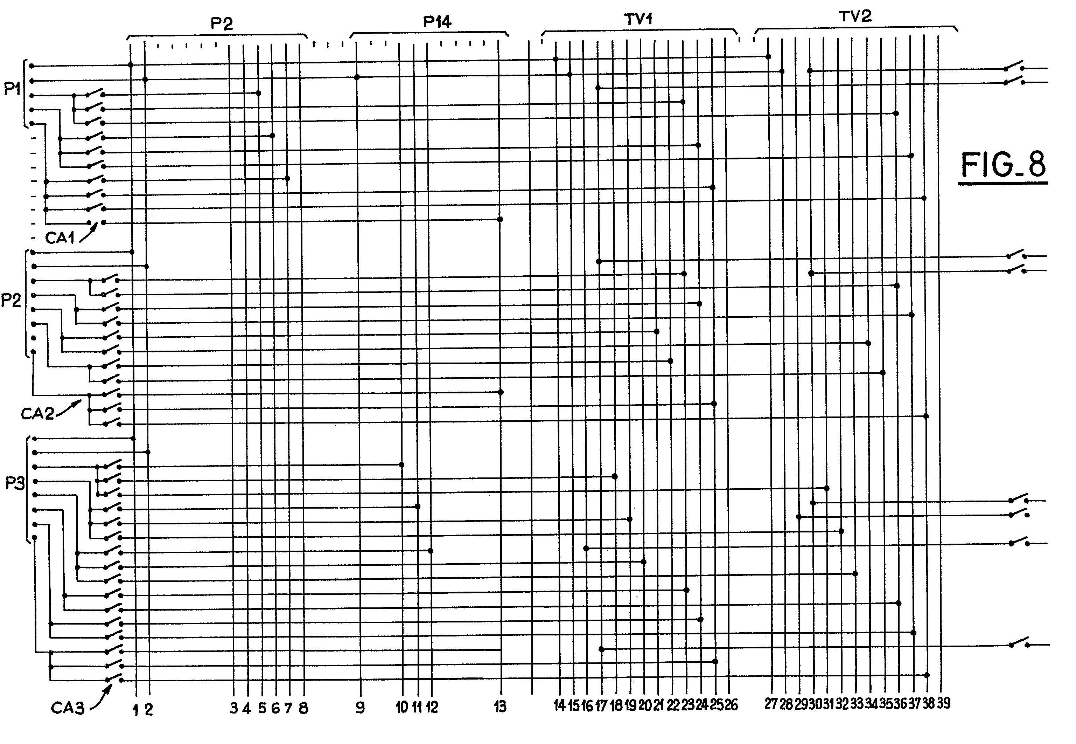

Un exemple plus détaillé de la structure du fond du boîtier B est représenté sur la figure 8.

Les lignes verticales, numérotées de 1 à 39, sont des lignes de liaison groupées suivant des bus relatifs chacun à un appareil ayant au moins une fonction réceptrice. Soit, plus précisément:

. lignes 1 à 8: bus magnétoscope (réception)P2,

. lignes 9 à 13; bus moniteur P14,

. lignes 14 à 26: bus téléviseur TV1,

. lignes 27 à 39: bus téléviseur TV2.

Ces quatre bus font, bien entendu, partie du bus analogique BAN indiqué plus haut.

Dans le détail, ces lignes correspondent aux fonctions suivantes:

. 1 – Echange
. 2 – Données
. 3 – Entrée audio D
. 4 – Entrée audio G
. 5 – Sortie audio D
. 6 – Sortie audio G
. 7 – Sortie vidéo
. 8 – Entrée vidéo
   –
. 9 – Données
. 10, 11, 12 – R. V. B.
. 13 – Sortie vidéo
   –
   –
. 14 – Echange
. 15 – Données
. 16 – Commande rapide
. 17 – Commande lente
. 18 ⎤ R
. 19 ⎬ V . . . . . sortie
. 20 ⎦ B
. 21 – Entrée audio D
. 22 – Entrée audio G

. 23 – Sortie audio D
. 24 – Sortie audio G
. 25 – Sortie vidéo
. 26 – Entrée vidéo

Les lignes 27 à 39 répètent identiquement les fonctions des lignes 14 à 26.

Les lignes d'échange 1, 14, 27, sont en réalité une seule et même ligne, à savoir la ligne E précédemment indiquée. Il en est de même des lignes 2, 9, 15 et 28 qui constituent la ligne D.

Les lignes horizontales correspondent à des broches sur des périphériques ayant au moins une fonction d'émission, à savoir: un récepteur 12 GHz (P1), un magnétoscope (en fonction d'émission) (P2), et un analyseur de films (en version R V B) (P3).

Pour le récepteur 12 GHz, les prises correspondent, de haut en bas, aux fonctions suivantes:
. Echange
. Données
. Entrée audio D
. Entrée audio G
. Entrée vidéo

Pour le magnétoscope:
. Echange
. Données
. Entrée audio D
. Entrée audio G
. Sortie audio D
. Sortie audio G
. Sortie vidéo
. Entrée vidéo

Pour l'analyseur de films:
. Echange
. Données
. Entrée rouge
. Entrée vert
. Entrée bleu
. Entrée audio D
. Entrée audio G
. Entrée vidéo

Les lignes horizontales sont reliées en permanence à au moins certaines lignes des bus. Ainsi, par exemple, elles sont toutes reliées en parallèle aux lignes correspondantes de deux téléviseurs. Les lignes vidéo sont reliées à la ligne vidéo du moniteur P14, et les lignes RVB de l'analyseur de films sont reliées aux lignes RVB du moniteur et des téléviseurs. Le magnétoscope n'est, bien entendu, par relié à lui-même.

Ces connexions permanentes peuvent être activées sélectivement par les commutateurs CA1, CA2, CA3 relatifs aux cartes modules des périphériques P1, P2, P3 qui permettent de faire apparaître l'image sur le moniteur ou sur l'un ou l'autre des deux téléviseurs, ou sur l'ensemble de ces récepteurs.

La transmission du son donne lieu à un choix du même ordre, de même que le branchement du magnétoscope.

Des commutateurs de commande lente et de commande rapide sont également branchés sur les lignes correspondantes des téléviseurs.

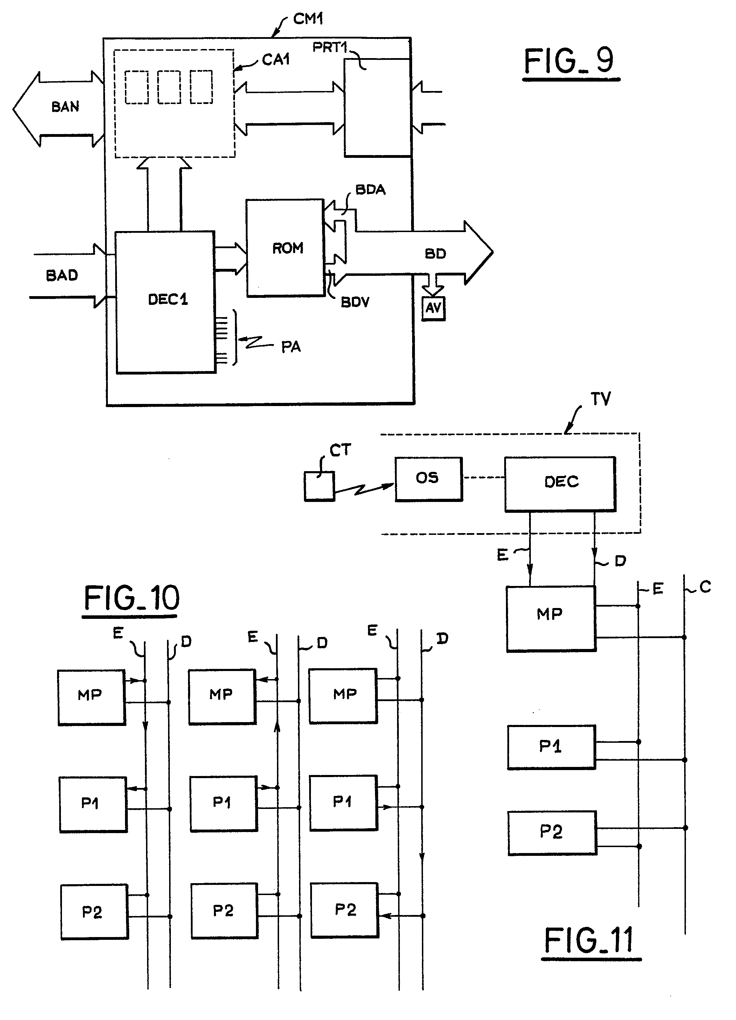

On va maintenant décrire plus en détail la structure fonctionnelle d'une carte module CM1, en référence à la figure 9, pour préciser son mode de fonctionnement.

Par la prise de péritélévision PRT 1, la carte module est reliée au périphérique correspondant supposé situé à droite de la figure. L'information analogique en provenance du (ou destinée au) périphérique transite vers (ou du) téléviseur (ou autre périphérique) par le bus analogique BAN, via les interrupteurs analogiques CA1 commandés à partir du bus d'adressage BAD, par l'intermédiaire du décodeur d'adresse DEC 1, où l'adresse de la carte module a été programmée en PA.

Cette adresse décodée attaque la mémoire morte ROM sur une demande adressée BDA provenant du bus de données BD. La mémoire transmet alors son contenu en BDV, par le bus BD, vers l'automate de visualisation AV, en vue de son affichage sur le téléviseur.

En ce qui concerne la circulation des informations de service sur les lignes d'échange E et de données E, celle-ci sera mieux comprise à la simple lecture des figures 10 et 11. Sur la figure 10 (partie gauche), on suppose que le microprocesseur MP interroge le périphérique P1 par la ligne d'échange E. Le périphérique P1 répond sur la ligne d'échange E (partie centrale) et, suite à cette question, adresse un ordre au périphérique P2 par la ligne de données D (partie droite). La transmission de cet ordre n'est pas perturbée, car, par la ligne d'échange E, le microprocesseur donne au seul périphérique P1 l'autorisation d'émettre.

La figure 11 montre l'intervention, sur de tels échanges, des ordres donnés par l'utilisateur par l'intermédiaire de l'organe sensible OS, lui-même attaqué à partir du clavier de télécommande CT. Ces ordres transitent vers le microprocesseur MP, par l'intermédiaire d'un décodeur DEC.

On va maintenant décrire sur un exemple simple, en référence à la figure 6, un mode d'utilisation possible du système conforme à l'invention.

On suppose que l'installation dont dispose l'utilisateur se compose, outre le téléviseur TV, des périphériques suivants:
. un récepteur P1 d'émissions à 12 GHz transmises par satellite,
. une caméra de surveillance P5,
. un magnétoscope P2,
. un magnétophone à bande P23,
. un amplificateur à basse fréquence de haute fidélité P26, muni de ses deux haut-parleurs HP.

L'utilisateur désire:
. regarder sur le téléviseur la transmission d'un opéra transmise par satellite,
. écouter le son de cette émission sur sa chaîne haute-fidélité,
. enregistrer ce son sur le magnétoscope à bandes,
. enregistrer, sur le magnétophone, une émission normale transmise en UHF et reçue par antenne à la même heure,
. surveiller au moins épisodiquement une chambre d'enfants par l'intermédiaire de la caméra de surveillance.

Il commence par frapper sur le clavier de télécommande CT un code simple correspondant à la mise en service d'un périphérique donné. Cet ordre, transmis au microprocesseur par la ligne de télécommande TC, provoque l'affichage sur l'écran du téléviseur TV du contenu de la mémoire ROM correspondant au périphérique en question et indiquant le détail des manœuvres à accomplir pour obtenir effectivement la mise en service souhaitée. Il exécute alors ces manœuvres sur le clavier CT.

Les périphériques ayant été convenablement interconnectés suivant les ordres transmis par la ligne de télécommande TC, l'information vidéo du récepteur 12 GHz P1 est transmise au téléviseur TV, alors que son information audio est transmise en parallèle à la chaîne haute fidélité P26 et au magnétophone à bandes P23. Le magnétoscope P2, relié à l'antenne, enregistre simultanément un autre programme et l'information vidéo de la caméra de surveillance P5 est transmise au téléviseur TV, par l'intermédiaire du module IDI (image dans l'image).

Pour assurer une certaine simplicité d'emploi de la télécommande, l'invention prévoit l'utilisation de touches spécialisées (touches de fonction, par exemple volume + ou −) associées à des touches alpha-numériques.

Différentes méthodes peuvent être utilisées pour transmettre les informations de code:

a) on peut par exemple frapper «V» «C» «R» sur les touches de l'émetteur qui lui transmettra un code qui correspondra à l'ensemble des lettres VCR.

b) selon une autre méthode l'émetteur transmet lettre par lettre ou signe par signe.

Ainsi, dans l'exemple choisi, l'utilisateur aurait actionné successivement les touches «V» «C» «R», le décodeur assemblant les signaux de code reçus pour former le code «VCR».

Les touches spécialisées quant à elles, émettent un code déterminé dans l'un ou l'autre cas.

Une méthode combinant les deux méthodes précécemment décrites peut être également utilisée.

Afin de réserver une zone de sécurité quant à une extension possible, aussi bien en nombre de périphériques commandés qu'en nombre de commandes par périphérique, le code pourra être constitué de différentes parties définies comme suit:

1. Zone «start».
2. Zone adresse périphérique avec éventuellement des protections.
3. Zone de code de commande avec éventuellement des protections.
4. Zone avec éventuellement un bit de parité.
5. Zone «stop».

La longueur des zones 2 et 3 dépend du nombre d'informations qu'elles contiennent.

En effet, le nombre de périphériques augmente la longueur de la zone d'adresse y compris sa protection et le nombre de commandes augmente la longueur de la zone commande y compris sa protection.

Le système selon l'invention permet de réaliser toute interconnexion désirée entre les périphériques, quelle que soit la complexité technique de cette interconnexion.

Il suffit à l'utilisateur de donner des ordres simples et brefs, puis de les confirmer par des ordres détaillés dont la complexité n'est plus un obstacle, puisqu'ils sont automatiquement affichés sur le téléviseur. Aucune manœuvre matérielle de connecteurs et de câbles n'est à effectuer, puisque les connexions s'effectuent par l'intermédiaire d'interrupteurs électroniques.

A cet avantage de souplesse et de simplicité d'utilisation s'ajoute celui d'une construction modulaire qui permet l'adjonction ultérieure de cartes modules supplémentaires, en cas d'acquisition de nouveaux périphériques.

Bien entendu, l'invention ne se limite pas aux exemples décrits, et l'on pourrait concevoir diverses variantes mineures, sans sortir de son cadre. Ainsi, par exemple, les modules CM1, CM2 ... pourraient ne pas être constitués par des circuits physiquement séparés et montés sur des cartes respectives distinctes, mais par des circuits physiquement réunis sur un même support de circuit imprimé. Il est alors logique de désigner ces modules sous l'appellation plus générale d'étages de commande. Dans une telle forme de réalisation, les moyens de décodage DEC1, DEC2 ... peuvent alors être réunis dans un circuit de décodage unique.

**Revendications**

1. Système de commande d'interconnexion sélective variable audio-vidéo à usage domestique comportant des lignes de liaison pour relier entre elles les entrées/sorties porteuses de modulation audio/vidéo d'au moins un téléviseur (TV) équipé d'une prise multibroches de péritélévision (PRT) et de plusieurs appareils périphériques (P1, P2, ...), dont certains comportent seulement des fonctions émettrices de signaux audio et/ou vidéo, dont d'autres comportent seulement des fonctions réceptrices, et d'autres enfin comportent à la fois ces deux fonctions, système comprenant des moyens pour prendre en compte les ordres d'un utilisateur, des moyens de traitement logique (MP) commandés par les moyens précités, et un bus de données (BD) associé à un bus d'adressage (BAD), pour transmettre des ordres établis pour la liaison sélective des périphériques entre eux et avec le téléviseur, caractérisé en ce que les lignes de liaison sont logées dans un boîtier muni de prises de péritélévision pour le relier à chacun des périphériques (P1, P2) et contenant les moyens de traitement logique (MP) et les bus de données (BB) et d'adressage précités (BAD), et sont scindées en deux groupes distincts l'un associé aux fonctions émettrices des appareils et l'autre aux fonctions réceptrices, en ce que pour la transmission de chaque type de signal représentatif d'une composante audio/vidéo les lignes qui lui sont affectées dans l'un des groupes sont reliées en parallèle à certaines au moins des lignes correspondantes de l'autre groupe, et en ce que ces connexions permanentes sont activables sélectivement par des interrupteurs analogiques (CA1, CA2, . . .) commandés par des moyens de décodage reliés au bus d'adressage (BAD) et au bus de données (BD) pour décoder les ordres de liaison.

2. Système conforme à la revendication 1, comportant un clavier de commande et de réglage du ou des téléviseur(s) et des divers appareils périphériques (P1, P2 . . .), dans lequel le clavier de commande (CT) est relié à un dispositif émetteur coopérant avec un organe sensible (OS) logé dans le téléviseur (TV), caractérisé en ce que cet organe sensible (OS) est relié aux divers étages de commande (CM1, CM2 . . .) et aux moyens de traitement logique (MD) pour la transmission des ordres émis à partir du clavier de commande (CT), des moyens de décodage de ces ordres étant uniquement périphérique situés dans les moyens de traitement logique et dans les étages de commande (CM1, CM2, . . .).

3. Système conforme à l'une des revendications 1 ou 2, comportant au moins un automate de visualisation (AV) pour afficher des informations alphanumériques sur un appareil récepteur d'images (TV), et une mémoire morte (ROM . . .) associée à chaque appareil périphérique (P), caractérisé en ce que chaque mémoire morte (ROM) contient des informations détaillées concernant les prescriptions de mise en service du périphérique (P1, P2 . . .) correspondant, et est reliée au microprocesseur (MP) pour la sélection des informations à présenter, et à l'automate (AV) de visualisation pour l'affichage de ces informations.

4. Système conforme à l'une des revendications 1 à 3, caractérisé en ce qu'il comprend un module (IDI) réalisé sous forme d'une carte imprimée embrochable (CIDI) portant des dispositifs de génération des commandes et commutations nécessaires à l'insertion sur l'écran du (des) téléviseur(s) (TV) d'une image auxiliaire appelée «image dans l'image», ce module comprenant des moyens pour choisir l'image principale et l'image secondaire parmi toutes les sources disponibles.

**Claims**

1. Variable selective audio-video interconnection control system for domestic use comprising connection lines for interconnecting the audio/video modulation carrier inputs/outputs of at least one television receiver (TV) equipped with a peripheral-television multipin connector (PRT) and with a plurality of peripheral units (P1, P2, . . .), a certain number of which have only audio and/or video signal emitting functions whilst others have only receiving functions and finally others have both of these functions, the system being provided with means for receiving a user's orders, logic processing means (MP) controlled by the means aforesaid, and a data bus (BD) associated with an addressing bus (BAD) for transmitting orders established for selective connection of the peripheral units with each other and with the television receiver, characterized in that the connection lines are housed within a casing fitted with peripheral television connectors for connecting it to each peripheral unit (P1, P2) and containing the logic processing means (MP) and the aforesaid data bus (BD) and address bus (BAD) and are split-up into two separate groups, one group being associated with the emitting functions of the units and the other group being associated with the receiving functions, in that for the transmission of each type of signal which is representative of an audio/video component, the lines which are assigned thereto in one of the groups are connected in parallel to at least a certain number of the corresponding lines of the other group, and in that these permanent connections can be selectively activated by analog switches (CA1, CA2, . . .) controlled by decoding means connected to the addressing bus (BAD) and to the data bus (BD) for decoding the connection orders.

2. System in accordance with claim 1, comprising a keyboard for controlling and adjusting the television receiver or receivers and the different peripheral units (P1, P2 . . .), in which the control keyboard (CT) is connected to an emitting device which cooperates with a sensitive element (OS) housed within the television receiver (TV), characterized in that this sensitive element (OS) is connected to the different control stages (CM1, CM2 . . .) and to the logic processing means (MP) for transmitting the orders emitted from the control keyboard (CT), means for decoding these orders being placed solely within the logic processing means and within the control stages (CM1, CM2, . . .).

3. System in accordance with either of claims 1 or 2, comprising at least one visualization automat (AV) for displaying alphanumeric data on an image-receiving unit (TV), and a read-only memory (ROM . . .) associated with each peripheral unit (P), characterized in that each read-only memory (ROM) contains detailed data relating to instructions for putting the corresponding peripheral unit (P1, P2 . . .) into service and is connected to the microprocessor (MP) for selecting the data to be presented, and to the visualization automat (AV) for displaying these data.

4. System in accordance with one of claims 1 to 3, characterized in that it comprises a module (IDI) constructed in the form of a plug-in printed card (CIDI) which carries devices for generating control and switching operations which are necessary for the insertion of an auxiliary image or so-called «image-within-image» on the screen of the television receiver or receivers (TV), this module being provided with means for selecting the principal image and the secondary image from all available sources.

**Patentansprüche**

1. Steuersystem für das selektive variable Audio-Video-Zusammenschalten für Heimzwecke, mit Verbindungsleitungen zur gegenseitigen Verbindung der Audio/Video-Modulationsträgereingänge bzw. -ausgänge mindestens eines mit einer Vielfachanschlussbuchse (PRT) für Fernsehperipherie ausgestatteten Fernsehgerätes (TV) und mehreren Peripheriegeräten (P1, P2, . . .), von denen gewisse nur Audio- und/oder Videosignal-Sendefunktionen, weitere nur Empfangsfunktionen und andere schliesslich zugleich beide dieser Funktionen besitzen, welches System Mittel zur Entgegennahme der Befehle eines Verwenders, von den genannten Mitteln gesteuerte Mittel (MP) zur logischen Verarbeitung und einen einem Adressbus (BAD) zugeordneten Datenbus (BD) zur Übertragung der erteilten Befehle für die selektive Verbindung von Peripheriegeräten untereinander und mit dem Fernsehgerät enthält, dadurch gekennzeichnet, dass die Verbindungsleitungen in einem Gehäuse untergebracht sind, das mit Fernsehperipherieanschlussbuchsen für seine Verbindung mit jedem der Peripheriegeräte (P1, P2) versehen ist und die Mittel (MP) zur logischen Verarbeitung sowie den Datenbus (BD) und den Adressbus (BAD) enthält, und in zwei verschiedene Gruppen getrennt sind, von denen die eine den Sendefunktionen der Geräte zugeordnet ist und die andere den Empfangsfunktionen, dass zur Übertragung jedes eine Audio/Video-Komponente repräsentierenden Signaltyps die diesem in einer der Gruppen zugeordneten Leitungen in Parallelschaltung mit zumindest gewissen entsprechenden Leitungen der anderen Gruppe verbunden sind, und dass die permanenten Verbindungen durch Analogschalter (CA1, CA2, . . .), die durch mit dem Adressbus (BAD) und dem Datenbus (BD) zur Dekodierung der Verbindungsbefehle verbundene Dekodiermittel gesteuert werden, selektiv aktivierbar sind.

2. System nach Anspruch 1, mit einer Steuer- und Regeltastatur für das oder die Fernsehgerät(e) und die diverse Peripheriegeräte (P1, P2. . .), bei welchem System die Steuertastatur (CT) mit einer Sendeeinrichtung verbunden ist, die mit einem in dem Fernsehgerät (TV) untergebrachten Abfühlorgan (OS) zusammenwirkt, dadurch gekennzeichnet, dass das Abfühlorgan (OS) mit den diversen Steuerstufen (CM1, CM2 . . .) und mit den Mitteln (MP) zur logischen Verarbeitung zwecks Übertragung der mit der Steuertastatur (CT) ausgesendeten Befehle verbunden ist, wobei sich die Mittel für die Dekodierung dieser Befehle nur in den Mitteln zur logischen Verarbeitung und in den Steuerstufen (CM1, CM2, . . .) befinden.

3. System nach Anspruch 1 oder 2, mit mindestens einem Anzeigeautomaten (AV) zur Darstellung alphanumerischer Informationen auf einem Bildempfangsgerät (TV) und mit einem jedem Peripheriegerät (P) zugeordneten Festspeicher (ROM . . .), dadurch gekennzeichnet, dass jeder Festspeicher (ROM) detaillierte Informationen betreffend die Anweisungen zur Inbetriebnahme der entsprechenden Peripherie (P1, P2 . . .) enthält und zwecks Auswahl der darzubietenden Informationen mit dem Mikroprozessor (MP) und zwecks Anzeige dieser Informationen mit dem Anzeigeautomaten (AV) verbunden ist.

4. System nach einem der Ansprüche 1 bis 3, dadurch gekennzeichnet, dass es einen Modul (IDI) in Form einer steckbaren Schaltungskarte (IDI) umfasst, die Einrichtungen zur Generierung von Steuerungen und Umschaltungen trägt, wie sie zum Einblenden eines «Bild in Bild» genannten Hilfsbildes auf dem Bildschirm des (der) Fernsehgeräte(s) (TV) notwendig sind, wobei dieser Modul Mittel zur Auswahl des Hauptbildes und des Sekundärbildes aus allen verfügbaren Quellen enthält.

BAN

OS

PRT

BD

MP    CM1    CM2    I.D.I.    AV

CA1    CA2

PRT1  ROM 1    PRT2  ROM 2

D

E

BAD

FIG_1

FIG_3

O

S

O

P

TV

OS

I    I

CT

P1    P2

0 015 797

6

FIG.2

$$\underline{FIG\_4}$$

FIG.5

FIG.6

FIG_7

FIG. 8

FIG_9

FIG_10

FIG_11